# EUROPÄISCHE PATENTSCHRIFT

(11) **EP 3 863 809 B1**
(45) Veröffentlichungstag und Bekanntmachung des Hinweises auf die Patenterteilung: **07.01.2026**
(21) Anmeldenummer: 19786550.4
(22) Anmeldetag: 09.10.2019
(51) Int. Cl.: B25J 9/16, B25J 9/00, B25J 19/00

(54) **VERFAHREN UND ANORDNUNG ZUR HOCHGENAUEN KALIBRIERUNG EINER PARALLELKINEMATIK**
METHOD AND ARRANGEMENT FOR THE HIGH-PRECISION CALIBRATION OF A PARALLEL KINEMATIC MECHANISM
PROCÉDÉ ET DISPOSITIF POUR L'ÉTALONNAGE DE HAUTE PRÉCISION D'UNE CINÉMATIQUE PARALLÈLE

(30) Priorität: 09.10.2018 DE 102018124898
(43) Veröffentlichungstag der Anmeldung: 18.08.2021
(73) Patentinhaber: Physik Instrumente (PI) SE & Co KG, 76228 Karlsruhe (DE)
(72) Erfinder: MANKIN, Erik, 76227 Karlsruhe (DE)
(74) Vertreter: Meissner Bolte Partnerschaft mbB
(86) Internationale Anmeldenummer: PCT/EP2019/077271
(87) Internationale Veröffentlichungsnummer: WO 2020/074543

(56) Entgegenhaltungen:
- EP-A1- 1 698 954
- GB-A- 2 505 558
- JP-A- 2010 207 967
- US-B1- 6 587 802

## Beschreibung

Die Erfindung betrifft ein Verfahren und eine Anordnung zur hochgenauen Kalibrierung einer Parallelkinematik.

Sogenannte Parallelkinematiken, insbesondere Hexapoden, welche auch als Stewart-Plattformen bezeichnet werden, finden u.a. in der hochgenauen Positionierung von Teilen in Produktionsprozessen Verwendung, und ihr Einsatzbereich hat sich in den letzten Jahren dramatisch erweitert. Für neu erschlossene Einsatzbereiche, etwa in der Halbleitertechnologie und der Herstellung integrierter Schaltkreise, wird höchste Genauigkeit gefordert. Zugleich herrscht auch bei diesen Anwendungen hoher Kostendruck, so dass die Option einer durchgängig hochpräzisen Fertigung der Einzelteile der Parallelkinematik aus Kostengründen ausscheidet.

Bei den zur Konstruktion ultrapräziser Mechanismen verwendeten Materialien ist es besonders vorteilhaft, wenn diese einen sehr geringen Ausdehnungskoeffizient aufweisen, wie etwa Keramiken. Diese Materialien bedürfen jedoch einer aufwändigen Bearbeitung. Hierbei ist zu berücksichtigen, dass die Werkzeugmaschinen zu deren Bearbeitung einen deutlich höheren Ausdehnungskoeffizienten haben, und die so bearbeiteten keramischen Körper Längenfehler aufgrund der stark unterschiedlichen thermischen Ausdehnung in sich tragen, weshalb sie einer nachträglichen Kalibriermaßnahme zu unterwerfen sind.

Es gibt eine Reihe von Ansätzen zur nachträglichen Genauigkeitssteigerung von Parallelkinematiken, die aus mit mäßiger Genauigkeit gefertigten Teilen zusammengesetzt sind. Hierzu wird verwiesen auf: https://www.uni-due.de/mechatronik/forschung/pkm.de, "PKM-Parallelkinematikmaschinen", Parallel Robots: Open Problems, Jean-Pierre MERLET INRIA, BP 93, 06902 Sophia-Antipolis, France, E-Mail: Jean-Pierre.Merlet@sophia.inria.fr sowie Gottlieb, J.: Non-parametric Calibration of a Stewart Platform, in: Proceedings of 2014, Workshop on Fundamental Issues and Future Research Directions for Parallel Mechanisms and Manipulators, July 7-8, 2014, Tianjin, China.

Aus der WO 99/28097 A1, JP 2010 207 967 A, EP 1 698 954 A1 sowie GB 2 505 558 A ist jeweils ein Verfahren nach dem Oberbegriff des Anspruchs 1 bekannt. Ähnliche Verfahren werden auch in der DE 100 27 106 A1 und der DE 198 58 154 A1 offenbart.

Der Erfindung liegt die Aufgabe zu Grunde, ein alternatives und unter Kostenaspekten vorteilhaftes Verfahren und eine entsprechende Anordnung zur hochgenauen Kalibrierung von Parallelkinematiken anzugeben.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 7 gelöst. Zweckmäßige Fortbildungen des Erfindungsgedankens sind Gegenstand der jeweiligen abhängigen Ansprüche.

Es ist ein Gedanke der Erfindung, die Genauigkeit einer mit üblichen Präzisionsanforderungen gefertigten und montierten Parallelkinematik durch Referenzierung an einem Referenzkörper zu steigern. Bei dem Referenzkörper handelt es sich um einen Starrkörper mit hochpräzise definierten, d.h. herstellungsseitig festgelegten oder messtechnisch erfassten

Geometrieparametern, der mit hohem Aufwand und entsprechend hohen Kosten gefertigt bzw. vermessen ist. Dessen Eignung und Nutzung zur Kalibrierung einer Vielzahl von Parallelkinematiken sorgt jedoch für eine angemessene Verteilung seiner Herstellungskosten und ermöglicht somit die kostensparende Bereitstellung entsprechend hochgenau kalibrierter Parallelkinematik-Produkte. Referenzkörper sind an sich in großer Vielzahl und für verschiedene Anwendungen bekannt, wurden jedoch nach Kenntnis der Erfinder zur Lösung der bestehenden Aufgabe bisher nicht eingesetzt, insbesondere nicht in den hier beschriebenen Ausgestaltungen und Verfahren.

Es ist ein weiterer Gedanke der Erfindung, dass die Lage der Teile der Parallelkinematik oder eine von diesen aufgespannte Außenkontur mittels des Referenzkörpers durch Verstellung verstellbarer Teile optimal an den

Referenzkörper angepasst wird. Schließlich gehört zur Erfindung der Gedanke, dass die zugehörigen Verstellparameter des oder jedes verstellten Teiles als Nullzustands-Produktparameter der Parallelkinematik gespeichert werden.

Speziell handelt es sich bei der Parallelkinematik um einen Hexapoden, der sechs an einer optionalen Basis angeordnete und verstellbare Beine und eine von den Beinen getragene Plattform aufweist. Die Basis (oder Bodenplatte) kann integraler Bestandteil des Hexapoden sein, d. h. dessen Beine können an der Basis angebracht sein. Grundsätzlich ist die Erfindung aber auch für einen Hexapoden ausführbar, dessen Beine auf einer hochgenauen externen Basis stehen, ohne mit dieser verbunden zu sein. Grundsätzlich ist das vorgeschlagene Verfahren aber auch für andere Typen von Parallelkinematiken mit höchsten Genauigkeitsanforderungen anwendbar.

Bei der Ausführung des Verfahrens werden an der Plattform und/oder an der Basis hochgenaue Eingriffselemente erzeugt oder angebracht, die zum Eingriff von am Referenzkörper vorgesehenen Kalibrier-Bezugselementen ausgebildet sind. Die Eingriffselemente werden hierbei durch Verstellen der Beine mit den Kalibrier-Bezugselementen in Eingriff gebracht, und die Verstellparameter der Beine als Nullzustands-Produktparameter gespeichert.

In einer Ausgestaltung haben die Eingriffselemente Hülsenform und die Kalibrierungs-Bezugselemente an die Abmessungen der Hülsen angepasste Stiftform, oder aber entsprechend umgekehrt mit Kalibrierungs-Bezugselementen in Hülsenform und mit Eingriffselementen mit an die Abmessungen der Hülsen angepasster Stiftform. In den weiter unten skizzierten Ausführungsbeispielen werden hülsenförmige Eingriffselemente auch als Kalibrierhülsen bezeichnet, und diese dienen in bauartgleicher Ausführung auch bei der Montage des Hexapoden der genauen Positionierung verschiedener Bauteile zueinander.

Die vorstehend bezeichneten Formen, also Hülsen- und Stiftform, sind jedoch nur beispielhafte und aus derzeitiger Sicht vorteilhafte geometrische Ausführungen der Eingriffselemente und der Kalibrier-Bezugselemente; andere Formen, wie etwa Kegelstumpf-, Prismen- oder Pyramidenformen und entsprechende Komplementärformen für die Eingriffselemente bzw. die Kalibrier-Bezugselemente sind ebenso möglich. In einer weiteren Ausführung der Erfindung hat der Referenzkörper die Form eines geraden Prismas mit einer mehrere Ecken aufweisenden Grundfläche. Diese Grundfläche ist zugleich eine untere Stirnfläche des Prismas, und eine obere Stirnfläche des Prismas, welche parallel zu der unteren Stirnfläche angeordnet ist, hat einer zur unteren Stirnfläche identische Form. An einer der Stirnflächen des Prismas ist eine erste Mehrzahl von Kalibrier-Bezugselementen und an der anderen Stirnfläche des Prismas ist eine zweite Mehrzahl von Kalibrier-Bezugselementen vorgesehen, wobei während oder innerhalb des Kalibrierungsvorgangs die erste Mehrzahl von Kalibrier-Bezugselementen mit der Plattform und die zweite Mehrzahl von Kalibrier-Bezugselementen mit der Basis oder einer Kalibrier-Unterlage des Hexapoden in Eingriff gebracht wird.

Insbesondere erscheint ein Referenzkörper mit der Form eines dreieckigen Prismas mit einer dreieckigen Grundfläche und mit je einem Kalibrier-Bezugselement an jeder Ecke seiner beiden Stirnflächen als geeignet, grundsätzlich können aber auch Referenzkörper mit mehr als drei Ecken aufweisenden Grundflächen oder auch Grundflächen mit gekrümmten Begrenzungskanten zum Einsatz kommen. Jedoch ist es nicht zwingend erforderlich, dass der Referenzkörper die Form eines Prismas hat. Zudem ist auch die Anordnung der Kalibrier-Bezugselemente an parallelen Stirnflächen eines Referenzkörpers nicht zwingend, da auch alternative, z.B. seitliche Anordnungen bzw. die Anordnung an Seitenflächen möglich sind.

In einer an den prismatischen Referenzkörper angepassten Ausführung ist vorgesehen, dass die Plattform und/oder die Basis des Hexapoden einen an die Form der Grundfläche des Referenzkörpers angepassten Durchbruch aufweist, wobei der Referenzkörper zur Kalibrierung durch einen Durchbruch in den zwischen der Plattform und der Basis befindlichen Bein-Bereich des Hexapoden eingeführt und aus diesem nach der Kalibrierung wieder entnommen wird. Diese Ausgestaltung ist auch in Verbindung mit einem nicht-prismatischen Referenzkörper möglich, sofern die Kontur des Durchbruchs der größten Umfangserstreckung des Referenzkörpers entspricht, d.h. etwas größer als jene ist. Bei Parallelkinematiken, die nicht die Charakteristika eines Hexapoden aufweisen und bei denen zwischen den Beinen bzw. Streben genug Platz zum seitlichen Einschieben eines Referenzkörpers ist, kann auf den erwähnten Durchbruch auch verzichtet werden.

Als Alternative zum vorstehend beschriebenen Verfahren, das vereinfacht als Kalibrierung mit einem inneren Referenzkörper bezeichnen werden kann, ist das Verfahren auch mit einem äußeren Referenzkörper durchführbar. Ein solches Verfahren zeichnet sich dadurch aus, dass die Plattform und die Basis des Hexapoden eine vieleckige Grundform, der Referenzkörper einen durchgehenden oder einen oberen und unteren, an die Grundform der Plattform bzw. Basis angepassten Ausschnitt hat und der Hexapod zur Kalibrierung durch den

Durchbruch oder die Durchbrüche in den Referenzkörper eingeführt und aus diesem nach der Kalibrierung wieder entnommen wird. Hier sind insbesondere an den parallel zueinander liegenden oberen und unteren Stirnflächen des Referenzkörpers eine erste und zweite Mehrzahl von Kalibrier-Bezugselementen vorgesehen, wobei während oder innerhalb des Kalibrierungsvorgangs die erste Mehrzahl von Kalibrier-Bezugselementen mit der Plattform und die zweite Mehrzahl von Kalibrier-Bezugselementen mit der Basis oder einer Kalibrier-Unterlage des Hexapoden in Eingriff kommt.

Die letztgenannte Alternative kann dem Entwerfer gegebenenfalls einen größeren konstruktiven Spielraum eröffnen. Sie ist im Übrigen nicht auf Hexapoden mit vieleckiger Plattform bzw. Basis beschränkt, sondern kann - unter Nutzung eines Referenzkörpers mit entsprechend angepassten durchgehenden oder oberen und unteren Einschnitten oder Nasen bzw. Einschnitten und/oder Nasen an der Basis und/oder der Plattform des Hexapoden - auch bei Parallelkinematiken mit gänzlich anders geformter Plattform bzw. Basis eingesetzt werden.

Erfindungsgemäß werden die Eingriffselemente an der Plattform mittels einer Plattform-Masterschablone erzeugt und hochgenau positioniert. Dies bedeutet einen wichtigen Schritt bei der Genauigkeitssteigerung von Parallelkinematiken, da sich Plattform und Basis mit all ihren kinematisch relevanten Geometrieparametern nur schwer und mit hohen Kosten hochpräzise bezüglich ihrer relativen Genauigkeit fertigen lassen.

Falls Einzelteile des Hexapoden beispielsweise aus einer Keramik oder aus einem ähnlichen Material hergestellt sind, wäre für den Kalibrierungsvorgang die Verwendung von Masterschablonen und/oder eines Referenzkörpers aus Keramik vorteilhaft.

Die Masterschablone/n soll/en hochgenau gefertigt sein. Ist die gewünschte Genauigkeit bei ihrer Fertigung nicht möglich, so werden die Koordinaten von durch die Masterschablone/n getragenen Referenzelementen hochgenau gemessen. Zur Unterscheidung der einzelnen Referenzelemente dient ein Orientierungssackloch, welches auch der Orientierungsdefinition des/der Masterschablone/n an den Orientierungssacklöchern an der Basis bzw. der Plattform dient.

Bei Hexapoden mit integrierter Basis wird entsprechend eine Basis-Masterschablone zur Erzeugung und hochgenauen Positionierung der Eingriffselemente an der Basis benutzt. Im Falle identischer Geometrie und Abmessung von Plattform (Gondel) und Basis kann für die Plattform und die Basis dieselbe Masterschablone benutzt werden.

Im Hinblick auf die weiter unten skizzierten Ausführungsbeispiele ist zwischen zwei bauartgleichen Typen von Eingriffselementen zu unterscheiden:
Der erste Typ von Eingriffselementen dient der Ausrichtung des Hexapoden zur Definition der Nullzustands-Produktparameter. In diese Eingriffselemente greifen die Kalibrier-Bezugselemente des Referenzkörpers ein.

Der zweite Typ von Eingriffselemente dient der Positionierung der sogenannten Podeste von verstellbaren Streben (im Folgenden Strebenpodeste). In diese Eingriffselemente greifen an den Strebenpodesten angeordnete Stifte, beispielsweise Dübelstifte, ein. Mit der Positionierung der Strebenpodeste werden mittelbar auch die Koordinaten der Gelenkkugeln definiert. Die Koordinaten der Strebenpodeste bzw. der Gelenkkugeln sind Geometrieparameter eines Hexapoden, welche seine Kinematik definieren und die konstruktiv vorgegeben sind. Die Genauigkeit der Positionierung bestimmt daher maßgeblich die Genauigkeit des Hexapoden. Bei einer anderen Konstruktion der Parallelkinematik oder einer anderen Definition der Hexapod-Geometrieparameter können die Eingriffselemente des zweiten Typs allerdings auch in andere konstruktiv relevante Bezugspunkte der Plattform bzw. der Basis gelegt werden.

Bei der erwähnten Ausgestaltung ist zweckmäßigerweise die Form der Referenzelemente an der Masterschablone bzw. den Masterschablonen in Anpassung an die Form der Eingriffselemente der Plattform, der Basis oder eines vergleichbaren Elementes der Parallelkinematik und damit wiederum in Korrespondenz zu den Kalibrierungs-Bezugselementen am Referenzkörper zu wählen. Insbesondere sind im Falle hülsenförmiger Eingriffselemente stiftförmige Referenzelemente oder im Falle stiftförmiger Eingriffselemente hülsenförmige Referenzelemente der Plattform-Masterschablone vorgesehen.

In einer weiteren Ausgestaltung des Verfahrens werden die Eingriffselemente durch Einsetzen und stoffschlüssiges Fixieren, insbesondere durch Verklebung bzw. Einkleben, von Hülsen oder Stiften in vorgefertigte, größer als die Hülsen oder Stifte bemessene Bohrungen in der Plattform bzw. Basis festgelegt. Grundsätzlich kommen außer Klebestoff auch Zement oder ggf. auch ein Weichlot oder ähnliche bewährte Mittel zur stoffschlüssigen Verbindung von Teilen in Betracht. Während der stoffschlüssigen Fixierung liegt eine Lagedefinition der Hülsen oder Stifte durch eine Masterschablone vor.

Vorrichtungsaspekte der Erfindung ergeben sich weitgehend aus den vorgenannten Verfahrensaspekten, so dass diese hier nicht vollständig nochmals ausgeführt werden. Es wird jedoch darauf hingewiesen, dass die vorgeschlagene Anordnung zumindest den erwähnten Referenzkörper einschließt, in einer Ausgestaltung zusätzlich die ebenfalls bereits erwähnte/n Masterschablone/n, und in einer weiteren Ausgestaltung auch eine Einrichtung zum Einbringen eines Mittels zur stoffschlüssigen Fixierung der hochgenauen Eingriffselemente in Bohrungen der Plattform bzw. Basis, insbesondere eine Klebstoff-Injektionseinrichtung.

Vorteile und Zweckmäßigkeiten der Erfindung ergeben sich im Übrigen aus der nachfolgenden Beschreibung von Ausführungsbeispielen anhand der Figuren. Von diesen zeigen:
- Fig. 1-9: verschiedene Ansichten eines Hexapoden als Beispiel einer Parallelkinematik, auf die das vorgeschlagene Verfahren angewandt werden kann,
- Fig. 10-19: verschiedene Ansichten einer Plattform bzw. einer korrespondierenden Basis des Hexapoden nach Fig. 1-9,
- Fig. 20-22: die Draufsicht, Seitenansicht und Untersicht einer Plattform-Masterschablone,
- Fig. 23-28: Ansichten von Kalibrierhülsen als Beispiel von an der Plattform (bzw. Basis) anzubringenden Eingriffselementen,
- Fig. 29-37: Ansichten der sog. Strebenpodeste, mit denen die Streben des Hexapoden an der Plattform und der Basis angebracht sind,
- Fig. 38-46: Ansichten der fertig montierten Basis (des Strebenträgers) des Hexapoden nach Fig. 1-9,
- Fig. 47-55: Ansichten eines beispielhaften Referenzkörpers in Gestalt eines dreieckigen Prismas mit Kalibrier-Bezugselementen an beiden Stirnflächen,
- Fig. 56-64: Darstellungen zur Erläuterung der Ausführung der Kalibrier-Bezugselemente.
- Fig. 65-73: Ansichten des Hexapoden nach Fig. 1-9 mit eingesetztem Referenzkörper während der Kalibrierung,
- Fig. 74 und 75: synoptische Darstellungen zur Erläuterung der beiden Phasen eines beispielhaften Kalibrierungsvorganges,
- Fig. 76 und 77: eine perspektivische Darstellung bzw. Seitenansicht eines weiteren Beispiels eines Hexapoden,
- Fig. 78 bis 86: verschiedene Ansichten eines zur Kalibrierung des Hexapoden nach Fig. 76 und 77 angepassten Referenzkörpers
- Fig. 87: eine Darstellung, die den Hexapoden nach Fig. 76 und 77 mit über diese geschobenem Referenzkörper zeigt.

Nachfolgend wird am Beispiel eines Hexapoden das Verfahren zur Genauigkeitssteigerung bei Parallelkinematiken verdeutlicht.

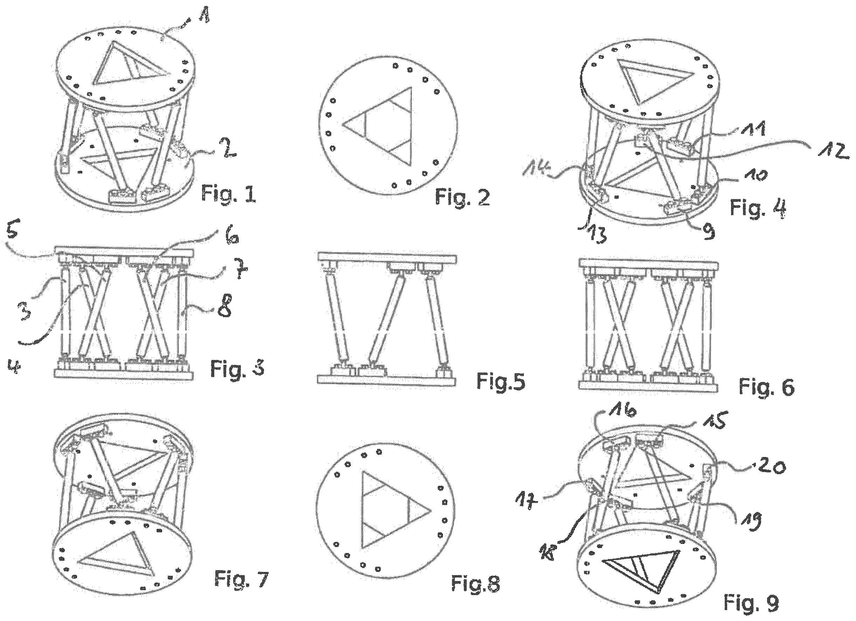

In Fig. 1 bis Fig. 9 sind Darstellungen eines zur erfindungsgemäßen Kalibrierung mit einem Referenzkörper und Masterschablonen geeigneten Hexapoden gezeigt. Zum Herausstellen des Wesentlichen sind Kabel, Kabelanschlüsse und die Antriebsmotoren im Inneren der Streben nicht eingezeichnet, während die Kugelgelenke der Beine nur angedeutet sind; die Längenveränderlichkeit der Streben ist nicht erkennbar.

In Fig. 1 ist die zu bewegende bzw. zu verstellende Plattform (Gondel) 1 sowie die Basis 2 gezeigt. In Fig. 3 sind die Streben 3, 4, 5, 6, 7 und 8 gezeigt, die durch ihre Längenänderung der Gondel 1 eine Pose ergeben. Eine Pose ist die Beschreibung der Lage eines Starrkörpers im Raum. Sie bezieht sich auf einen frei wählbaren Drehpunkt, und definiert quantitativ die Drehung des Starrkörpers um diesen als Pivotpunkt bezeichneten Drehpunkt sowie die räumliche Verschiebung dieses Drehpunktes. In Fig. 4 sind die Strebenpodeste 9, 10, 11, 12, 13 und 14 der Basis 2 gezeigt. Eine Strebe mit ihren beiden zugehörigen Strebenpodesten wird als Bein bezeichnet. In Fig. 9 sind die Strebenpodeste 15, 16, 17, 18, 19 und 20 der Gondel 1 verdeutlicht.

In diesem Ausführungsbeispiel sind ohne Beschränkung der Allgemeinheit die Basis sowie die bewegliche Plattform identisch konstruiert. Der Grundkörper der Basis 2 und der Gondel 1, d.h. der nicht montierte und freigestellte Einzelkörper der Basis 2 und der Gondel 1, wird im Folgenden jeweils auch als Teller bezeichnet.

### Konstruktion der beiden identischen Teller

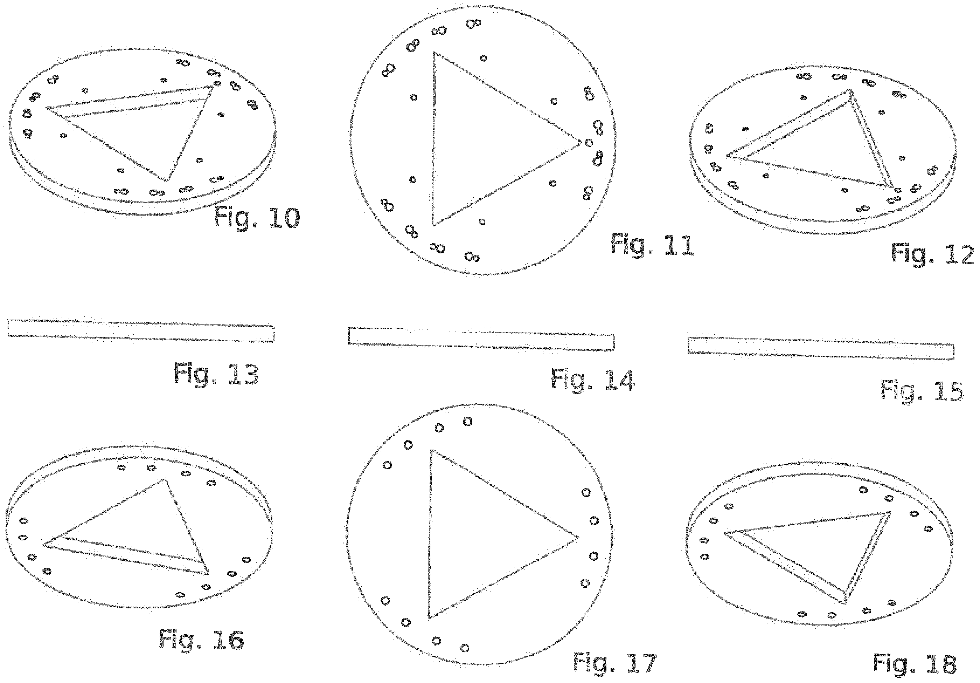

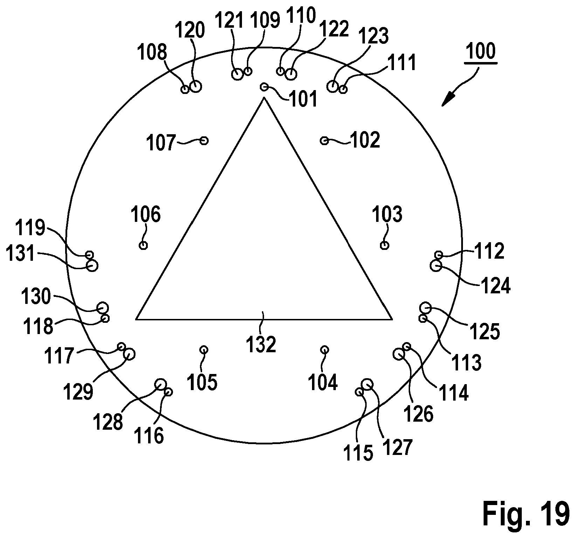

In Fig. 10 bis Fig. 19 ist ein Teller in seinen Projektionen dargestellt; in Fig. 19 ist der Teller mit Ziffer 100 bezeichnet.

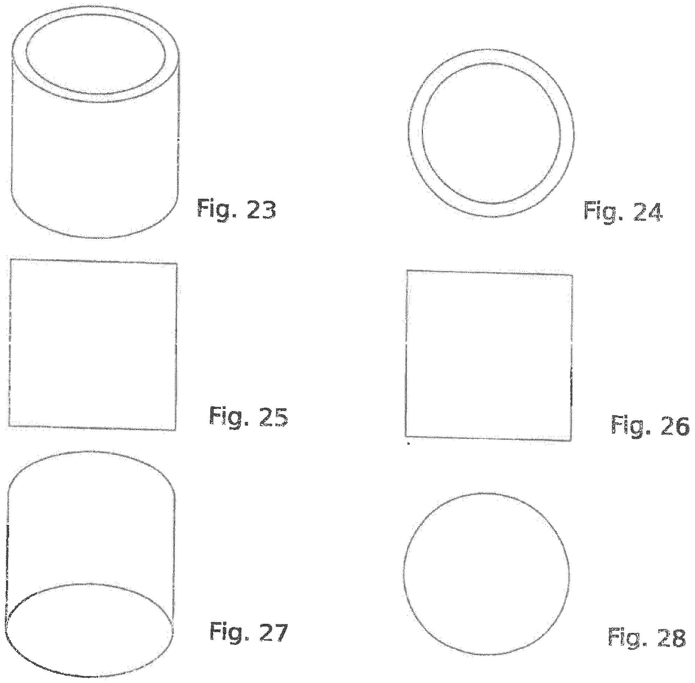

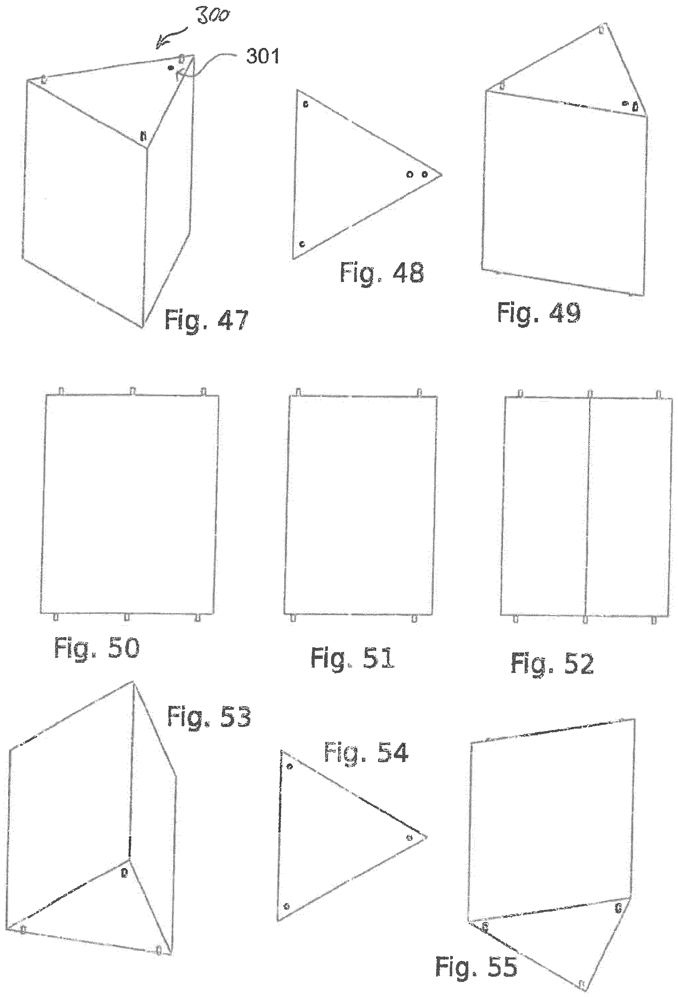

In Fig. 19 sind Sacklöcher 102-107 zur Aufnahme von Eingriffselementen in Form von Kalibrierhülsen (siehe Fig. 23-28) gezeigt. Die Kalibrierhülsen dienen als Andockpunkte für einen Referenzkörper und ermöglichen das Bestimmen der korrekten Beinlängen in der Initialisierungspose. In Fig. 19 sind weiterhin Sacklöcher 108-119 gezeigt. Diese Sacklöcher dienen ebenfalls der Aufnahme von Eingriffselementen in Form von Kalibrierhülsen, wobei die entsprechenden Kalibrierhülsen für die Lagedefinition der Strebenpodeste vorgesehen sind. Alle der Kalibrierung dienenden Sacklöcher in den Tellern haben dieselbe Tiefe und denselben Durchmesser. In Fig. 19 sind weiterhin Bohrungen 120-131 mit Innengewinde gezeigt. Diese dienen dem Festschrauben der Strebenpodeste. In Fig. 19 ist auch ein Orientierungssacklock 101 eingezeichnet. Dieses Orientierungssackloch 101 dient lediglich zum Brechen der Symmetrien bezüglich der Drehung, um beim Zusammenbau des Hexapoden eine definierte Orientierung der Teller gegeneinander und eine definierte Orientierung des Hexapoden beim Eingreifen des ebenfalls in seiner Symmetrie gebrochenen Referenzkörpers sicherzustellen. Zum Brechen der Symmetrie des zu verwendenden Referenzkörpers 300 gemäß Fig. 47 dient ein Orientierungssackloch 301, welches an der Oberseite des Referenzkörpers 300 angeordnet ist. Die Unterseite des Referenzkörpers 300 gemäß Fig. 47 weist kein solches Orientierungssackloch auf. Definierte Orientierungen sind ebenfalls erforderlich, wenn die Masterschablonen und/oder der Referenzkörper wie unten erwähnt nicht in der gewünschten Genauigkeit gefertigt werden können, und deshalb vermessen werden.

In Fig. 19 ist weiterhin ein dreieckiger Montagedurchbruch 132 gezeigt. Er erlaubt es, den zu verwendenden prismenförmigen Referenzkörper gemäß Fig. 47 zur Justage ins Innere des Hexapoden zu bringen. Das Dreieck des Montagedurchbruchs ist gleichschenkelig.

### Konstruktion und Herstellung der Masterschablone/n

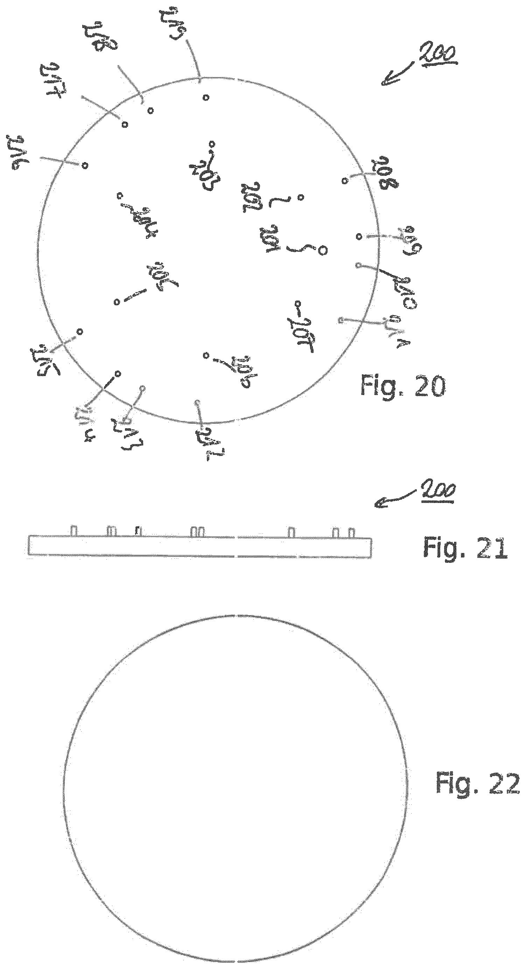

Fig. 20 zeigt eine Masterschablone 200 zur hochgenauen Positionierung der Kalibrierhülsen in den Tellern von oben, Fig. 21 von der Seite, und Fig. 22 zeigt die Masterschablone von unten, ihre Unterseite ist nicht bearbeitet. Der Grundkörper der Masterschablone ist eine Kreisscheibe mit einem zum Teller identischen Durchmesser.

Aus der Masterschablone ragen Referenzelemente in Form von Referenzzylindern 202 bis 219 zur präzisen Festlegung der Lage der Kalibrierhülsen in den Tellern 100 gemäß Fig. 10-18. Diese Referenzzylinder sind hochgenau geformt und sollen alle um dieselbe vorgegebene Länge aus der Kreisscheibe ragen. Gelingt es, die Seite der Kreisscheibe, aus der die Referenzzylinder ragen, extrem plan zu fertigen, so kann diese plane Fläche als Referenzebene für das Herausragen der Referenzzylinder verwendet werden. Andernfalls sollen die Deckflächen aller Referenzzylinder auf einer gedachten Ebene liegen, die zur Kreisscheibenoberfläche möglichst parallel ist.

Auf der Masterschablone befindet sich weiterhin ein Orientierungssackloch 201. Dieses Orientierungssackloch 201 dient lediglich zum Brechen der Symmetrie bezüglich einer Drehung und ermöglicht es, Masterschablone und Teller gegeneinander definiert zu orientieren.

Die Masterschablone/n ist/sind ein hochgenaue/s Artefakt/e. Diese/s Artefakt/e wird/werden einmalig hergestellt. Das notwendige Können zum Herstellen solcher Artefakte liegt bei Normungsinstituten wie der PTB.

Wenn produktionstechnisch und vom Aufwand her möglich, ist jeder der Referenzzylinder im Rahmen der erforderlichen Genauigkeit ohne Abweichung zu den konstruktiven Vorgaben positioniert. Hier kommt es nicht darauf an, dass eine Positionierung hochgenau relativ zur Scheibe erfolgt; wichtig ist nur, dass die Koordinaten der Mittelpunkte der Referenzzylinder-Deckflächen relativ zueinander hochgenau positioniert sind. Zur Erläuterung ist gesagt, dass eine alle Referenzzylinder in derselben Weise erfassende geringfügige Verschiebung und/oder Verdrehung in Bezug auf die sie tragende Kreisscheibe unschädlich ist.

Erweist es sich als unmöglich oder zu aufwändig, alle Referenzzylinder in der gewünschten Weise genau gegeneinander zu positionieren, so werden die Referenzzylinder den Möglichkeiten nach genau zueinander positioniert, die Lage der Referenzzylinder zueinander dann aber hochgenau relativ zueinander vermessen.

### Vorbereitung der Masterschablone zum Abdruck

Auf die 18 Referenzzylinder der Masterschablone werden die Kalibrierhülsen gestülpt. Die Böden der Kalibrierhülsen liegen dabei der Kreisscheibe der Zylinderdeckel auf. Die Ränder der Kalibrierhülsen liegen der Oberfläche der Masterschablone nicht auf, da die Tiefe der Kalibrierhülsen geringer ist als die Länge der Zylinder.

### Vorbereitung der Teller

Die Kalibrierhülsen werden in die Sacklöcher geklebt. Hierzu werden die Sacklöcher mit einer definierten Menge Kleber gefüllt, jedoch in einer solch geringen Menge, dass kein Kleber über den Rand der Kalibrierhülsen quellen wird.

Wenn mit Hilfe von zwei oder drei Kalibrierhülsen zusammen später ein anderes mechanisches Teil im Zuge des Zusammenbaus eines Hexapoden positioniert wird, dann sollte höchstens eine dieser Kalibrierhülsen mit einem harten Kleber wie etwa einem Zement oder einem aushärtenden Harz verklebt werden. Die anderen Kalibrierhülsen sollten dagegen mit einem leicht elastischen Kleber befestigt werden, der unter Druck noch eine geringe Verformbarkeit aufweist. Insbesondere wegen der kleinen Passungen der Kalibrierhülsen auf den Kalibrier-Bezugselementen des Referenzkörpers soll verhindert werden, dass Maßabweichungen und Erscheinungen der Wärmeausdehnung ein Ineinandergreifen aller Kalibrierhülsen und Referenzzylinder und damit die Einstellung der Nullzustands-Produktparameter verhindern. Außerdem soll verhindert werden, dass Maßabweichungen und Erscheinungen der Wärmeausdehnung den Zusammenbau des Hexapoden unmöglich machen. Weiterhin können als leicht elastische Kleber solche verwendet werden, bei denen die Möglichkeit zu einer vollständigen Aushärtung besteht.

Alternativ kann eine Montage gegebenenfalls auch ohne den Einsatz eines elastischen Klebers erfolgen, indem durch eine unterschiedliche geeignete Temperierung der einzelnen Bauteile eine Passung erreicht wird.

Da Teller und Masterschablone jeweils ein Orientierungssackloch aufweisen, welches jeweils die Symmetrie bezüglich der Drehung bricht, kann eindeutig definiert werden, welche Sacklöcher mit welchem Kleber behandelt werden.

### Abdruck der Masterschablone in die Teller

Masterschablone und Teller werden nun ineinander gesteckt, wobei auf die gegenseitige Ausrichtung der Orientierungssacklöcher zu achten ist Die Kreisscheibenflächen liegen dabei plan und bündig aufeinander. Die Teile können voneinander getrennt werden, sobald die Kleber ausgehärtet sind.

### Montage der Strebenpodeste

Im Anwendungsbeispiel bestehen aus Gründen der Einfachheit und Darstellbarkeit die Beine aus drei Teilen, nämlich zwei Strebenpodesten und der in der Länge veränderlichen Strebe selbst.

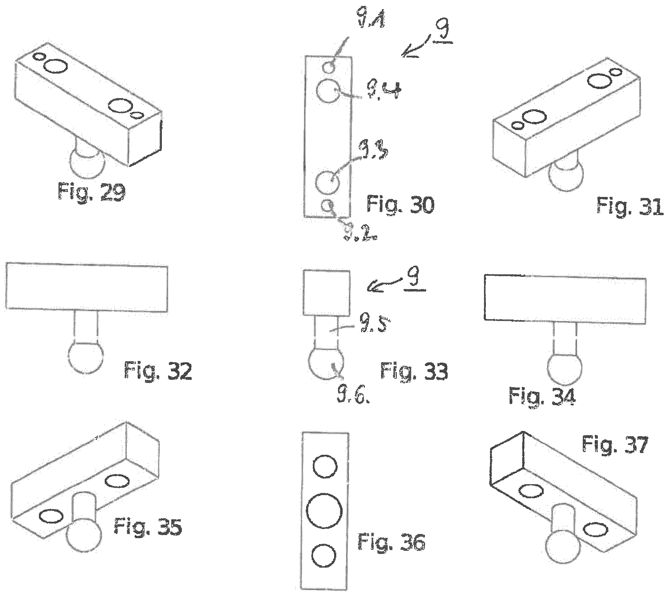

Auf den Tellern werden zunächst die Strebenpodeste befestigt, dann später auf den Kugeln der Strebenpodeste die Streben selbst, wobei die Kugeln Teil eines Kugelgelenks sind. Ein Strebenpodest 9 mit Bohrungen 9.1-9.4 und einem Kugelgelenkteil 9.5, 9.6 zum Eingriff einer (nicht gezeigten) Kugelgelenkschale einer Strebe ist in Fig. 29 bis 37 dargestellt.

Das in Fig. 30 gezeigte Strebenpodest 9 verfügt über zwei Sacklöcher 9.1 und 9.2, die jeweils einen Dübelstift aufnehmen. Die Dübelstifte haben die Gestalt von Zylinderstiften. Zur definierten Ausrichtung eines Strebenpodests sind zwei Dübelstifte erforderlich. Die Dübelstifte stecken während der Justierung und Montage einerseits in einem Sackloch des Strebenpodests, mit der anderen Seite im Loch der passenden Kalibrierhülse, die im Teller verklebt ist. Bei den Dübelstiften handelt es sich also um Zylinderstifte, welche die Sacklöcher und Kalibrierhülsen lateral zueineinander ausrichten.

Da die Strebenpodeste geometrisch klein sind im Verhältnis zu den Maßen des gesamten Hexapoden, wird für das Ausführungsbeispiel davon ausgegangen, dass die Strebenpodeste in konventioneller Weise hochgenau gefertigt werden können, denn die erforderlichen relativen Genauigkeiten in der Fertigung bezüglich dieser Teile sind in Bezug auf die Größe des gesamten Hexapoden zu sehen und erhöhen sich dementsprechend. Alternativ kann bei der Herstellung der Strebenpodeste in analoger Weise wie bei der Konstruktion der Teller vorgegangen werden, indem nämlich in den Strebenpodesten und in den Tellern Sacklöcher vorgesehen sind, in die mittels einer weiteren eigens gefertigten Masterschablone Kalibrierhülsen eingeklebt werden, wobei auch die Kugel in analoger Weise darauf bezogen positioniert wird.

Die Positionierung der Kugeln der Strebenpodeste kann mit Hilfe von Kalibrierhülsen und Dübelstiften realisiert werden, wobei das Strebenpodest eine Kalibrierhülse, der die Kugel tragende Zylinder zwei Kalibrierhülsen und die Kugel selbst eine Kalibrierhülse aufweist. Mit zwei Dübelstiften kann die Lage der Kugel dann insgesamt lateral definiert werden. Die Positionierung der Kalibrierhülsen jeweils auf dem Kalibrierpodest, dem die Kugel tragenden Zylinder sowie der Kugel kann mit speziellen Masterschablonen erreicht werden. Zur Befestigung des Zylinders auf dem Strebenpodest und der Kugel auf dem Zylinder kann ein Hochleistungsklebstoff verwendet werden.

Nach dem Einstecken der Dübelstifte in die Strebenpodeste werden die Strebenpodeste am Teller festgeschraubt. Für die Schrauben sind im Strebenpodest 9 zwei Bohrungen 9.3 und 9.4 zur Durchführung vorgesehen.

Die eben beschriebene Art der Befestigung definiert keine exakte Einbauhöhe der Strebenpodeste, da ihre Grundflächen plan auf dem Teller aufliegen. Ohne Beschränkung der Allgemeinheit wird in dem vorliegenden Ausführungsbeispiel in dieser Weise vereinfacht vorgegangen. Diese vereinfachte Vorgehensweise ist auch eine empfohlene reale Vorgehensweise, da die Teller später mit dem Referenzkörper ausgerichtet werden. Eine Fehlerbetrachtung ergibt, dass die Fehler in der Höhe der Strebenpodeste einen Fehler niederer Ordnung nach sich ziehen, da die Beinlängen durch Nullzustands-Produktparameter mit dem Referenzkörper definiert sind. Der sich auf die Genauigkeit der Posen auswirkende Restfehler entsteht dadurch, dass die Beine infolge des Höhenfehlers einen geringfügig anderen kinematischen Aufbau aufweisen als konstruktiv festgelegt. Dieser Fehlereinfluss wird umso geringer, je geringer der konstruktiv vorgesehene Abstand der Kugeln zur Oberfläche des Tellers ist.

Bei den genannten Dübelstiften zur Ausrichtung der Strebenpodeste handelt es sich um Kreiszylinder der passenden Größe, auf eine entsprechende Konstruktionszeichnung wurde in den Figuren verzichtet.

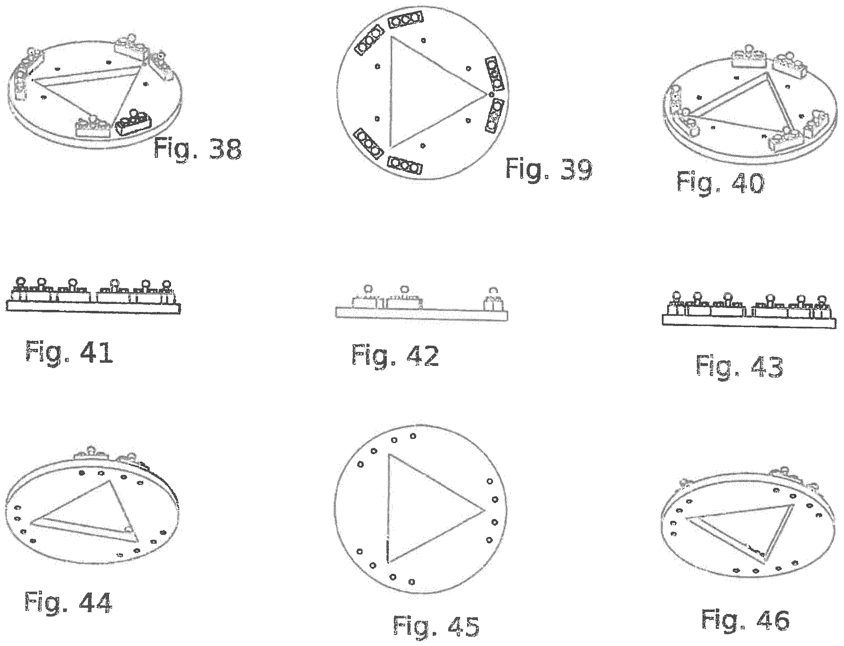

Die Teller mit allen fertig montierten Strebenpodesten heißen Strebenträger. Man erkennt die Sechskantköpfe der Maschinenschrauben in Fig. 38.

Ein Strebenträger ist in Fig. 38 bis Fig. 46 gezeigt.

### Vorbereitungen zum Einsetzen des Referenzkörpers

Verfügen die Streben des Hexapoden über keine Absolutsensoren, so werden die Streben zunächst referenziert. Hierzu werden sie in eine Stellung ausgelenkt, in der ein Referenzschalter anspricht, und der inkrementelle Längenmeßsensor genullt. Nach dieser Nullung können zu den Strebenauslenkungen die zugehörigen Strebenlängen durch Auslesen des inkrementellen Längensensors der Streben erhalten werden. Bei Streben mit Absolutsensor ist eine Referenzierung nicht nötig.

Danach wird die Gondel aufwärts gefahren, um den Referenzkörper in das Innere des Hexapoden schieben zu können. Hierfür ist der Montagedurchbruch vorgesehen.

### Aufbau des Referenzkörpers

Ein beispielhafter Referenzkörper 300 ist in Fig. 47 bis Fig. 55 gezeigt.

Der Referenzkörper 300 hat die Form eines geraden Prismas mit drei Ecken. Seine Grundfläche hat die Form eines gleichschenkeligen Dreiecks. Die Seitenlänge dieses Dreiecks ist etwas kleiner gewählt als der in Fig. 19 gezeigte dreieckige Montagedurchbruch 132. Damit ist ein Durchstecken des Referenzkörpers 300 durch den Montagedurchbruch 132 ermöglicht.

Aus dem Prisma ragen sechs identisch konstruierte Kalibrier-Bezugselemente in Form von Kalibrierstiften. Diese haben die Form von Kreiszylindern, die jeweils einen Sockel aufweisen, im Folgenden Kalibrierstiftsockel genannt. Der Durchmesser der Kreiszylinder ist so bemessen, dass sie exakt in die Kalibrierhülsen passen.

Die Höhe des prismenförmigen Grundkörpers ist die um die doppelte Sockelhöhe verminderte vertikale Differenz zwischen den oberen und den unteren konstruktiv vorgegebenen Beinendpunkten. Es wird hier konstruktiv davon ausgegangen, dass in der Initialisierungspose alle oberen und unteren Beinendpunkte jeweils in einer Ebene liegen, wobei diese beiden Ebenen parallel zueinander sind. Zur Erläuterung ist gesagt, dass die wesentlichen Geometrieparameter eines Hexapoden vereinfacht durch die Koordinaten dieser 12 Beinenendpunkte definiert werden können, wobei die unteren und oberen Beinendpunkte jeweils starr miteinander verbunden sind, und wobei diese Punkte kinematisch relevant sind, weil in diesen Punkten Kugel- bzw. Kardangelenke liegen. Die Koordinaten der Gelenke werden ebenfalls - und zwar mittelbar - durch die Beinendpunkte definiert.

Ein Kalibrierstiftsockel hat denselben Außendurchmesser wie die entsprechende Kalibrierhülse. Steckt ein Kalibrierstift bündig in seiner Kalibrierhülse, liegt also der Kalibrierstiftsockel dem Rand der Kalibrierhülse auf, so ist durch die Koordinaten der Kalibrierhülse ein Satz von drei kartesischen Koordinaten gegeben, auf die die Kalibrierstifte positioniert werden.

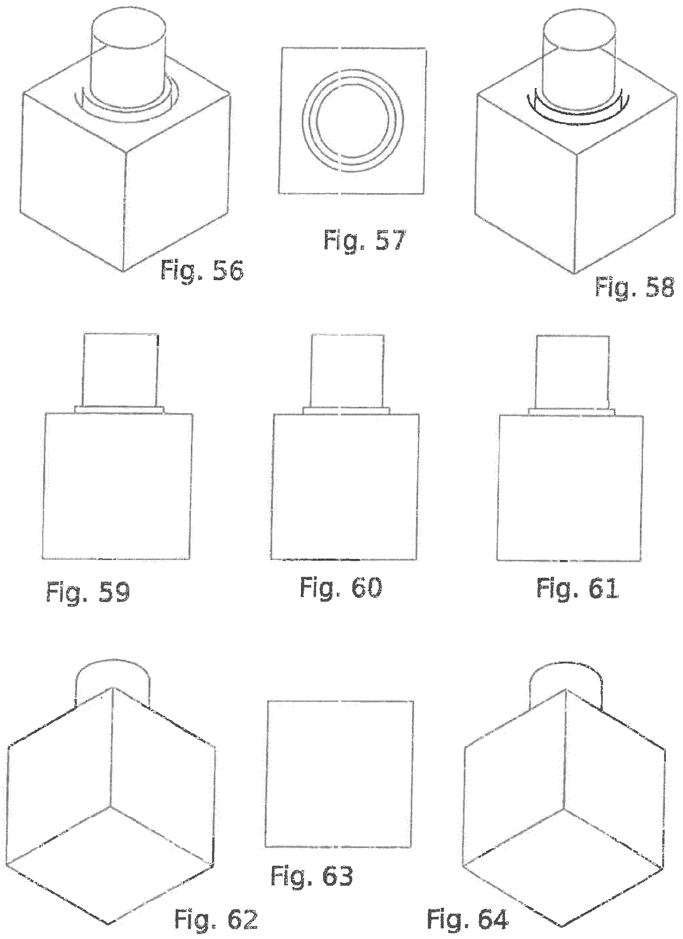

Die Prismenoberfläche liegt aufgrund des Kalibrierstiftsockels, zu erkennen insbesondere in Fig. 61, niemals der Oberfläche der Kreisscheibe des Strebenträgers auf.

In Abb. 56 bis Abb.64 ist ein Kalibrierstift dargestellt. Er ist hier vereinfacht an einem Würfel angebracht gezeigt und beispielhaft in einem Sackloch durch Klebung befestigt.

Der Referenzkörper soll hochgenau gefertigt sein, da sich seine Genauigkeit in der Genauigkeit der Ausrichtung in der Initialisierungspose des Hexapoden widerspiegelt. Ist die gewünschte Genauigkeit bei seiner Fertigung nicht möglich, so werden die Koordinaten der Kalibrierstifte hochgenau gemessen. Zur Unterscheidung der einzelnen Kalibrierstifte dient das Orientierungssackloch 301 in Fig. 47.

### Einpassung des Referenzkörpers und die nachfolgende Justage

Der Referenzkörper gelangt durch den dreieckigen Montagedurchbruch 132 in Fig. 19 in das Innere des zu kalibrierenden Hexapoden. Die drei unteren Kalibrierstifte des Referenzkörpers werden in die entsprechenden Kalibrierhülsen der Basis gesteckt. Dabei ist zu beachten, dass der Referenzkörper 300 zum Brechen der Symmetrie über ein Orientierungssackloch 301 verfügt, ebenso wie die Basis und die Plattform (Bezugszeichen 101 in Fig. 19). Der Referenzkörper wird also in definierter Weise eingesteckt.

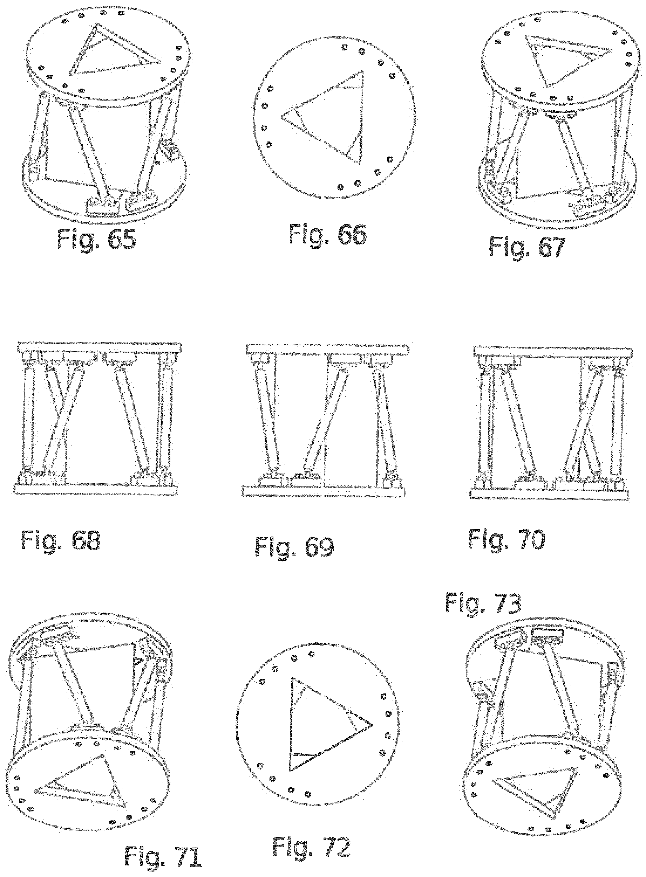

Der Hexapod mit eingestecktem Referenzkörper ist in den Figuren 65 bis 73 gezeigt. Der Referenzkörper ist hierbei gegenüber beiden dreieckigen Montagedurchbrüchen in Fig. 19 um 30° verdreht.

Der Hexapod wird nun in einen unbestromten und dadurch manuell beweglichen Zustand gebracht; sodann wird die Gondel in einer Weise bewegt, dass die Kalibrierstifte in die oberen Kalibrierhülsen eingreifen.

Ist dies geschehen, so werden die Strebenlängen ausgelesen und passend zur Seriennummer des Hexapoden festgehalten. Werden diese Strebenlängen später kommandiert, so befindet sich der Hexapod in eben dieser definierten Lage.

Nach dem Auslesen der Strebenlängen wird die Gondel nach oben bewegt, und der Referenzkörper kann entnommen werden.

Nach diesem Kalibriervorgang sind die zu kommandierenden Strebenlängen bekannt, die zu der so definierten Initialisierungspose gehören.

War der Referenzkörper oder die Masterschablone in einer Weise gefertigt, dass nach dessen/deren Herstellung relevante Fertigungsabweichungen aufgetreten sind, so werden die Geometrieparameter des Referenzkörpers bzw. der Masterschablone/n in einer Weise umgerechnet, dass die realen Geometrieparameter des Hexapoden erhalten werden, insbesondere auch aller Eingriffselemente. Damit sind alle tatsächlich vorliegenden Geometrieparameter des Hexapoden bekannt, und der Hexapod ist kalibriert.

Als Modell zur kinematischen Ansteuerung des Hexapoden werden die durch die Kalibrierung bekannten bzw. definierten Geometrieparameter des Hexapoden herangezogen.

### Bezug der Kalibrierung auf Posen eines Weltkoordinatensystems

Nach dem vorstehend beschriebenen Kalibriervorgang entsprechen die realen Geometrieparameter des Hexapoden den konstruktiv vorgesehenen Geometrieparametern, der Hexapod ist also entsprechend der Fehlergrenzen fehlerfrei, zumindest aber sind seine realen Geometrieparameter bekannt, da sie sich aus den realen Geometrieparametern der Masterschablone/n und des Referenzkörpers errechnen lassen. Dies gilt auch für die Position jener Eingriffselemente, in welche die Kalibrier-Bezugselemente eingriffen.

Steht der Hexapod auf einer schiefen Unterlage, oder sind die scheibenförmigen Teller nicht ideal geformt, so werden hiervon beeinflusste Posen gemessen. Denn die Posenmessungen beruhen gewöhnlich auf Antastungen der Gondel oder eines an ihr befestigten Körpers in Bezug auf ein äußeres Koordinatensystem, welches keinen Bezug zu den kinematisch relevanten Geometrieparametern des Hexapoden hat.

Letztlich gilt es aber, einen sogenannten Tool Center Point TCP zu positionieren. Als TCP bezeichnet man die Koordinaten und Orientierung jenes Teils einer Kinematik, auf dessen Positionierung und Bewegung hin die Kinematik konstruiert ist und auf dessen genaue Koordinaten und Orientierung die Kalibrierungsmaßnahmen abzielen.

Um einen wahren Bezug der Posen des TCP zu einem Weltkoordinatensystem zu erlangen, bleiben die Kalibrierhülsen , die dem Referenzkörper zum Eingriff gedient hatten, weiterhin zugänglich. Ihre Koordinaten definieren sich aus den Geometrieparametern der Masterschablonen/n und den Geometrieparametern des Referenzkörpers. Um ein hochgenaues Positionieren mit dem Hexapoden zu erreichen, sind die Koordinaten dieser Kalibrierhülsen in der Basis auf das Weltkoordinatensystem zu beziehen. Alternativ kann man auch die Koordinaten der Kalibrierhülsen der Gondel auf das Weltkoordinatensystem beziehen, wenn der Hexapod kalibriert ist und sich in seiner Initialisierungspose befindet. Die Lage eines TCP selbst bezieht sich auf die Lage der Kalibrierhülsen der Gondel, die dem Referenzkörper zum Eingriff gedient hatten.

Abweichungen sekundärer Geometrieparameter, wie etwa eine mangelnde Formtreue der Teller, spielen dann keine Rolle mehr.

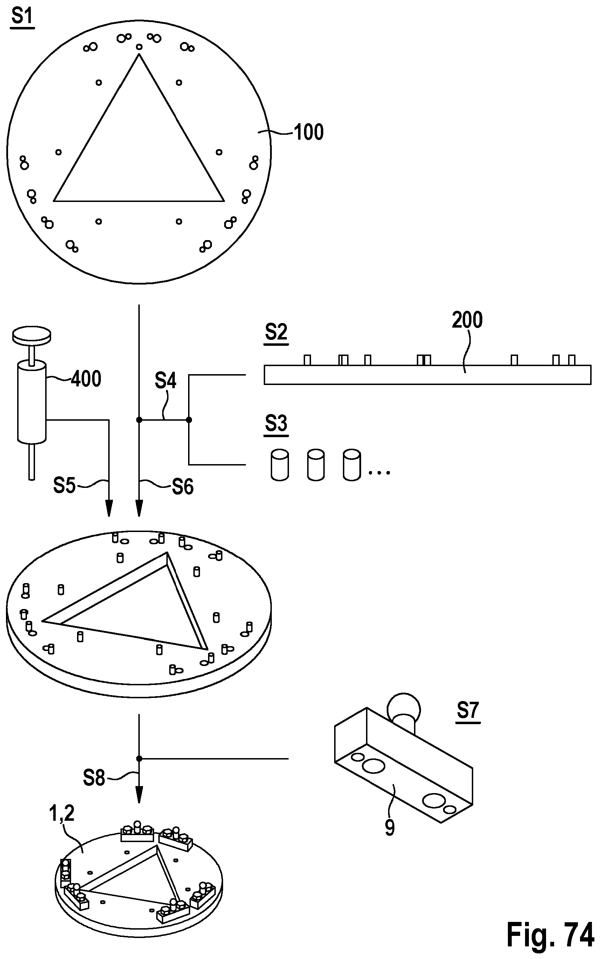

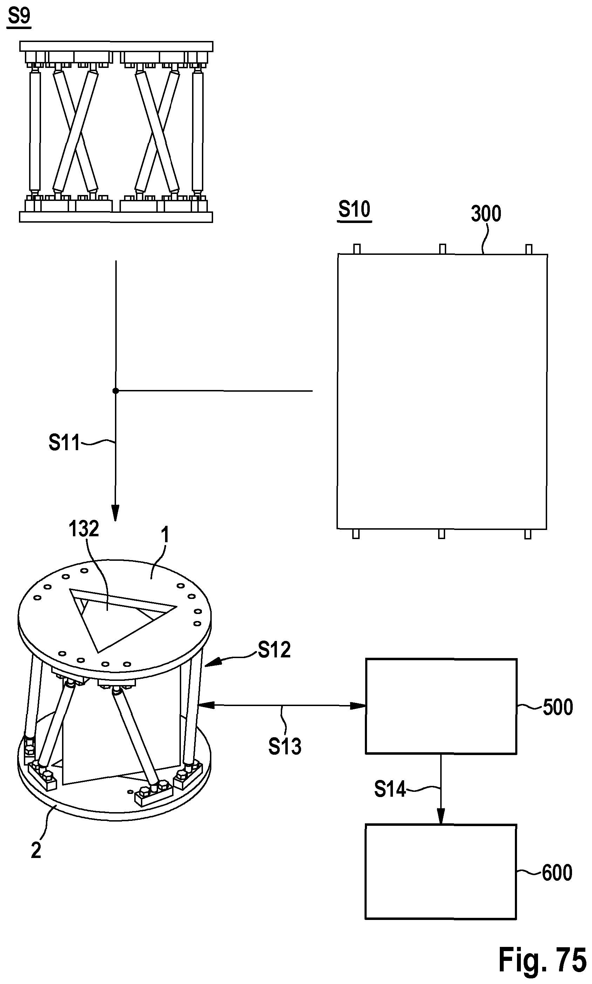

Fig. 74 und 75 zeigen für das vorstehend beschriebene Ausführungsbeispiel zusammenfassend eine Phase I und eine Phase II des vorgeschlagenen Verfahrens und schematisch die dabei eingesetzten Anordnungskomponenten. Es wird darauf hingewiesen, dass beide Darstellungen lediglich schematisch und insbesondere nicht maßstäblich sind.

In Fig. 74 ist dargestellt, dass als erster Schritt S1 ein vorgefertigter Teller 100 eines Hexapoden mit den üblichen Herstellungsverfahren und der diesen inhärenten Genauigkeit bereitgestellt wird, der Sacklöcher zur Befestigung der Kalibrierhülsen bzw. Eingriffselemente (hier nicht gesondert bezeichnet) mit etwas vergrößertem Durchmesser aufweist. In einem Schritt S2 wird die weiter oben genauer beschriebene Plattform-Masterschablone 200 bereitgestellt, und in einem Schritt S3 werden auf die Referenzzylinder der Masterschablone passende Kalibrierhülsen bereitgestellt. In einem Schritt S4 werden die Kalibrierhülsen auf die Referenzzylinder aufgesteckt.

In einem Schritt S5 wird mittels einer Klebstoff-Injektionseinrichtung 400 Klebstoff in die Sacklöcher eingebracht, um die Kalibrierhülsen in den Sackbohrungen in der durch die Masterschablone vorgegebenen exakten Ausrichtung fixieren zu können. Dann wird in einem Schritt S6 die Masterschablone 200 mit der Unterseite des Tellers 100 derart ausgerichtet, dass die Referenzzylinder der Masterschablone mit den aufgesteckten Hülsen in den entsprechenden Sacklöchern des Tellers 100 sitzen. Danach muss das Aushärten des Klebers abgewartet werden.

In einem Schritt S7 werden die Strebenpodeste 9 zur Anbringung der Streben bereitgestellt und mit Dübelstiften versehen, und in einem Schritt S8 werden die in den Strebenpodesten angeordneten Dübelstifte in die Kalibrierhülsen bzw. Eingriffselemente des Tellers gesteckt und anschließend werden die Strebenpodeste mit dem Teller 100 verschraubt, womit insgesamt eine Plattform (Gondel) 1 bzw. Basis 2 mit hoher Genauigkeit hergestellt ist.

Danach folgt die Montage der Streben. Hierbei ist auf die Orientierungen der Basis und der Plattform anhand der Orientierungssacklöcher zu achten.

Fig. 75 zeigt, dass in einem Schritt S9 ein vollständiger Hexapod gemäß Fig. 1-9 montiert bereitgestellt wird. In einem Schritt S10 wird ein Referenzkörper 300 bereitgestellt, und in einem Schritt S11 wird der Referenzkörper 300 durch den Durchbruch 132 der Plattform 1 des Hexapoden in dessen Innenraum eingeführt und dort soweit verdreht, dass seine Kalibrier-Bezugselemente nahe zu drei (hier nicht sichtbaren) Kalibrierhülsen an der Plattform 1 einerseits und der Basis 2 andererseits zu liegen kommen. Hierbei ist auf die Orientierung des Referenzkörpers relativ zum Hexapoden zu achten, wobei die Orientierungen anhand der Orientierungssacklöcher unterscheidbar sind.

Nach Deaktivierung des motorischen Verstellmechanismus' der Streben des Hexapoden werden die Streben manuell - oder auch durch einen hierfür vorgesehenen externen Verstellmechanismus - derart verstellt, dass die Kalibrier-Bezugselemente des Referenzkörpers 300 mit den Kalibrierhülsen an Plattform und Basis in Eingriff kommen, was Schritt S12 des Verfahrens darstellt. In einem Schritt S13 werden durch eine Sensoreinrichtung 500 die zugehörigen Verstellparameter der Beine erfasst, und in einem Schritt S14 werden diese als Nullzustands-Produktparameter des konkreten Produkts für dessen Einsatz gespeichert.

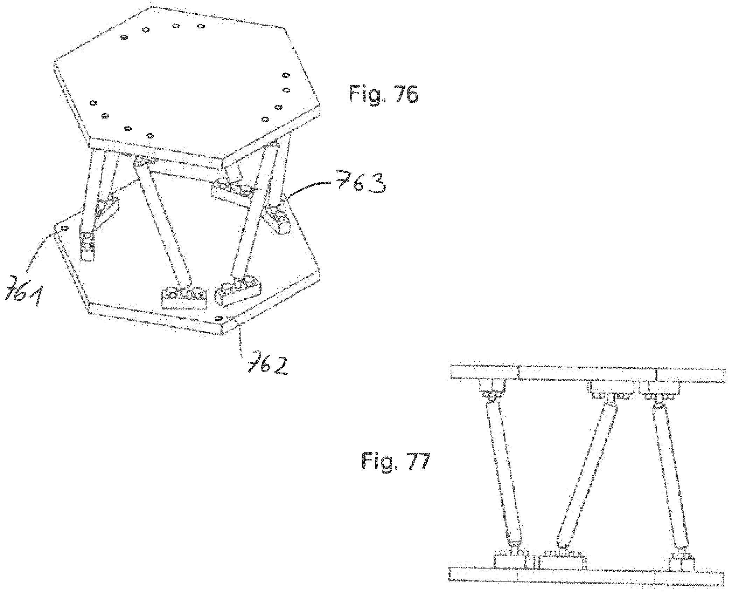

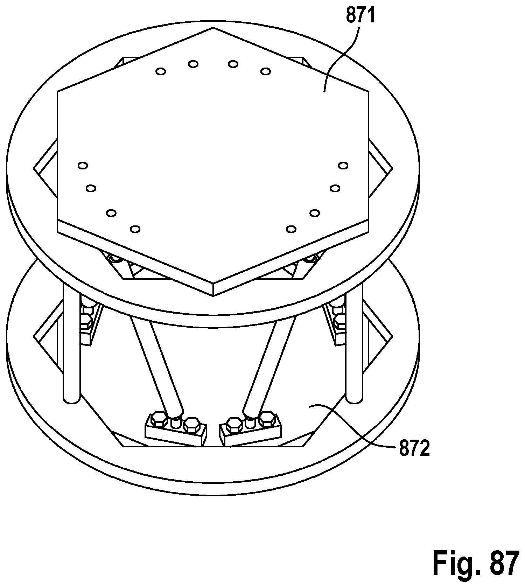

Fig. 76 bis 87 zeigen in verschiedenen Ansichten zur Verdeutlichung einer weiteren Ausführung des erfindungsgemäßen Verfahrens einen weiteren Hexapoden, der eine gegenüber der obigen ersten Ausführung anders geformte Plattform (Gondel) 871 und Basis 872 (siehe Fig. 87) aufweist. Die Plattform 871 und die Basis 872 sind hierbei sechseckig geformt und haben - abweichend zu der ersten Ausführungsform - keinen Durchbruch. Der Aufbau ist ansonsten identisch zu dem weiter oben beschriebenen Hexapoden, so dass er hier nicht nochmals erläutert wird.

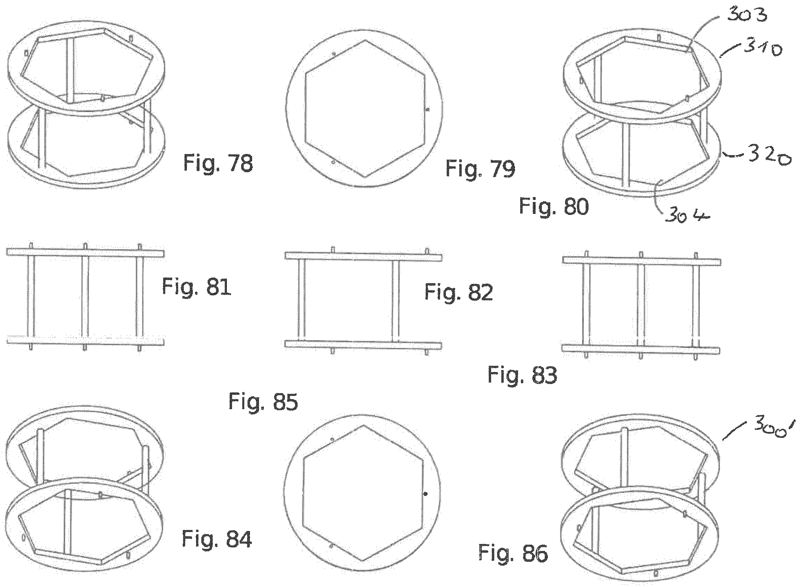

Zur Kalibrierung eines solchen Hexapoden wird ein "äußerer" Referenzkörper eingesetzt, der in Entsprechung zum Referenzkörper 300 nach Fig. 47 mit Ziffer 300' (siehe Fig. 86) bezeichnet ist. Gewissermaßen in Umkehrung der weiter oben beschriebenen Vorgehensweise wird beim zugehörigen Verfahren der Hexapod (von unten oder oben) durch die an die Grundform der Plattform 871 und der Basis 872 des Hexapoden angepassten Durchbrüche 303, 304 in der oberen Platte 310 und unteren Platte 320 des Referenzkörpers eingeschoben. Anschließend wird zur Ausführung der Kalibrierung der Hexapod innerhalb des hier außenliegenden Referenzkörpers etwas verdreht und dann auseinandergeschoben, bis die (nicht gesondert bezeichneten) entsprechenden Kalibrierhülsen des Hexapoden und die Kalibrier-Bezugselemente des Referenzkörpers in Eingriff kommen. Für weitere Einzelheiten dieses Verfahrensschrittes wird auf die obigen Erläuterungen zur ersten Ausführungsform verwiesen.

In Fig. 76 sind drei in dieser Perspektive sichtbare Eingriffselemente bzw. Kalibrierhülsen 761, 762, und 763 der Basis 872 zu erkennen.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Verfahren zur hochgenauen Kalibrierung einer Parallelkinematik, die mehrere Teile umfasst, von denen zumindest ein Teil beweglich und mit definierten Verstellparametern verstellbar ist, wobei die Lage der Teile oder eine von diesen aufgespannte Außenkontur mittels eines mit hoher Genauigkeit gefertigten oder vermessenen Referenzkörpers (300) durch Verstellung des oder mindestens eines verstellbaren Teiles festgelegt wird und die zugehörigen Verstellparameter des oder jedes verstellten Teiles als Nullzustands-Produktparameter der Parallelkinematik gespeichert werden, wobei es sich bei der Parallelkinematik um einen Hexapoden handelt, der sechs an einer optionalen Basis (2) angeordnete, insbesondere angebrachte, und verstellbare Beine (3-8) und eine von den Beinen getragene Plattform (1) aufweist, wobei an der Plattform und/oder an der Basis des Hexapoden hochgenaue Eingriffselemente (761, 762, 763) erzeugt oder angebracht werden, die zum Eingriff von am Referenzkörper vorgesehenen Kalibrier-Bezugselementen ausgebildet sind, die Eingriffselemente durch Verstellen der Beine mit den Kalibrier-Bezugselementen in Eingriff gebracht werden und die Verstellparameter der Beine als Nullzustands-Produktparameter gespeichert werden, **dadurch gekennzeichnet, dass** die hochgenauen Eingriffselemente an der Plattform und/oder der Basis jeweils mittels einer Masterschablone (200) erzeugt werden, welche Referenzelemente sowohl für die Eingriffselemente als auch für die Anlenkpunkte der Beine des Hexapoden aufweist und die Positionen sowohl der Eingriffselemente für die Kalibrierung als auch der Anlenkpunkte der Beine mittels der Referenzelemente der Masterschablone festgelegt werden, wobei insbesondere im Falle hülsenförmiger Eingriffselemente stiftförmige Referenzelemente oder im Falle stiftförmiger Eingriffselemente hülsenförmige Referenzelemente der Masterschablone vorgesehen sind.

2. Verfahren nach Anspruch 1, wobei die Eingriffselemente Hülsenform und die Kalibrierungs-Bezugselemente an die Abmessungen der Hülsen angepasste Stiftform haben oder umgekehrt.

3. Verfahren nach Anspruch 1 oder 2, wobei der Referenzkörper die Form eines geraden Prismas besitzt, die Plattform und/oder die Basis des Hexapoden einen an die Form der Grundfläche des Referenzkörpers angepassten Durchbruch aufweist/aufweisen und insbesondere an der parallelen oberen und unteren Stirnfläche des Referenzkörpers eine erste und zweite Mehrzahl von Kalibrier-Bezugselementen vorgesehen ist, wobei während des Kalibrierungsvorgangs die erste Mehrzahl von Kalibrier-Bezugselementen mit der Plattform und die zweite Mehrzahl von Kalibrier-Bezugselementen mit der Basis oder mit einer Kalibrier-Unterlage des Hexapoden in Eingriff gebracht wird,
wobei der Referenzkörper zur Kalibrierung durch den Durchbruch in den Bein-Bereich des Hexapoden eingeführt und aus diesem nach der Kalibrierung wieder entnommen wird.

4. Verfahren nach Anspruch 1 oder 2, wobei die Plattform und die Basis des Hexapoden eine vieleckige Grundform aufweisen, und der Referenzkörper einen durchgehenden oder einen oberen und unteren, an die Grundform der Plattform und der Basis angepassten Ausschnitt hat und insbesondere an der parallelen oberen und unteren Stirnfläche des Referenzkörpers eine erste und zweite Mehrzahl von Kalibrier-Bezugselementen vorgesehen ist, wobei während des Kalibrierungsvorgangs die erste Mehrzahl von Kalibrier-Bezugselementen mit der Plattform und die zweite Mehrzahl von Kalibrier-Bezugselementen mit der Basis oder mit einer Kalibrier-Unterlage des Hexapoden in Eingriff gebracht wird,
und der Hexapod zur Kalibrierung durch den Durchbruch oder die Durchbrüche in den Referenzkörper eingeführt und aus diesem nach der Kalibrierung wieder entnommen wird.

5. Verfahren nach einem der vorangehenden Ansprüche, wobei die Eingriffselemente und/oder die Anlenkpunkte der Beine durch Einsetzen und stoffschlüssiges Fixieren, insbesondere Einkleben, von Hülsen oder Stiften in vorgefertigte, größer als die Hülsen oder Stifte bemessene Bohrungen in der Plattform und/oder der Basis festgelegt werden.

6. Verfahren zur Herstellung einer Parallelkinematik,
wobei die Teile zu einer Basis-Parallelkinematik vor-montiert werden und die Parallelkinematik durch Anwendung des Verfahrens nach einem der vorangehenden Ansprüche fertiggestellt wird.

7. Anordnung zur Durchführung des Verfahrens nach einem der vorangehenden Ansprüche, welche einen hochgenauen Referenzkörper (300) zur Festlegung der Lage der Teile der Parallelkinematik aufweist und welche zusätzlich mindestens eine Masterschablone (200) mit Referenzelementen (202 - 219) zur Festlegung der Position der hochgenauen Eingriffselemente (761, 762, 763) an der Plattform und/oder der Basis und der Anlenkpunkte der Beine des Hexapoden umfasst.

8. Anordnung nach Anspruch 7, wobei der Referenzkörper die Form eines geraden Prismas mit zwei parallel zueinander angeordneten Stirnflächen hat, und insbesondere an jeder der beiden Stirnflächen eine Mehrzahl von Kalibrier-Bezugselementen vorgesehen ist.

9. Anordnung nach Anspruch 8, wobei die Kalibrier-Bezugselemente eine an die Eingriffselemente der Plattform und/oder der Basis angepasste Stift oder Hülsenform haben.

10. Anordnung nach einem der Ansprüche 7 bis 9, wobei sowohl die Kalibrier-Bezugselemente des Referenzkörpers als auch die Referenzelemente der Masterschablone stift- oder hülsenförmig sind.

11. Anordnung nach einem der Ansprüche 7 bis 10, weiter aufweisend eine Einrichtung zum Einbringen eines Mittels zur stoffschlüssigen Fixierung der hochgenauen Eingriffselemente in Bohrungen der Plattform, insbesondere eine Klebstoff-Injektionseinrichtung.

## Claims

1. Method for high-precision calibration of a parallel kinematic mechanism comprising several parts, at least one of which is movable and adjustable with defined adjustment parameters, wherein the position of the parts or an outer contour defined by them is determined by means of a reference body manufactured or measured with high precision (300) manufactured or measured with high precision, and the associated adjustment parameters of the or each adjusted part are stored as zero-state product parameters of the parallel kinematics,
wherein the parallel kinematics is a hexapod comprising six legs (3-8) arranged, in particular attached, on an optional base (2) and a platform (1) carried by the legs,
wherein high-precision engagement elements (761, 762, 763) are produced or attached to the platform and/or the base of the hexapod, which are designed to engage calibration reference elements provided on the reference body, the engagement elements are brought into engagement with the calibration reference elements by adjusting the legs, and the adjustment parameters of the legs are stored as zero-state product parameters, **characterized in that** the high-precision engagement elements are generated on the platform and/or the base by means of a master template (200) which has reference elements for both the engagement elements and the articulation points of the legs of the hexapod, and the positions of both the engagement elements for calibration and the articulation points of the legs are determined by means of the reference elements of the master template, wherein, in particular, in the case of sleeve-shaped engagement elements, pin-shaped reference elements are provided in the master template, and in the case of pin-shaped engagement elements, sleeve-shaped reference elements are provided in the master template.

2. Method according to claim 1, wherein the engagement elements are sleeve-shaped and the calibration reference elements are pin-shaped, adapted to the dimensions of the sleeves, or vice versa.

3. Method according to claim 1 or 2, wherein the reference body has the shape of a straight prism, the platform and/or the base of the hexapod has/have an opening adapted to the shape of the base surface of the reference body and, in particular, a first and second plurality of calibration reference elements are provided on the parallel upper and lower end faces of the reference body, wherein during the calibration process the first plurality of calibration reference elements are provided with the platform and the second plurality of calibration reference elements are provided with the base of the hexapod, and wherein during the calibration process the first plurality of calibration reference elements are provided with the platform and the second plurality of calibration reference elements are provided with the base of the hexapod.reference elements are provided on the parallel upper and lower end faces of the reference body, wherein during the calibration process the first plurality of calibration reference elements is brought into engagement with the platform and the second plurality of calibration reference elements is brought into engagement with the base or with a calibration base of the hexapod,
wherein the reference body is inserted into the leg area of the hexapod for calibration through the opening and is removed from it again after calibration.

4. Method according to claim 1 or 2, wherein the platform and the base of the hexapod have a polygonal basic shape, and the reference body has a continuous or an upper and lower cutout adapted to the basic shape of the platform and the base, and in particular a first and second plurality of calibration reference elements are provided on the parallel upper and lower end faces of the reference bodyreference elements are provided on the parallel upper and lower end faces of the reference body, wherein during the calibration process the first plurality of calibration reference elements is brought into engagement with the platform and the second plurality of calibration reference elements is brought into engagement with the base or with a calibration base of the hexapod,
and the hexapod is inserted through the opening or openings in the reference body for calibration and removed from it again after calibration.

5. Method according to one of the preceding claims, wherein the engagement elements and/or the articulation points of the legs are fixed by inserting and mechanically securing, in particular gluing, sleeves or pins into prefabricated holes in the platform and/or the base that are larger than the sleeves or pins.

6. Method for manufacturing a parallel kinematic mechanism,
wherein the parts are pre-assembled to form a basic parallel kinematic mechanism and the parallel kinematic mechanism is completed by applying the method according to one of the preceding claims.

7. Arrangement for carrying out the method according to one of the preceding claims, which has a high-precision reference body (300) for determining the position of the parts of the parallel kinematics and which additionally has at least one master template (200) with reference elements (202-219) for determining the position of the high-precision engagement elements (761, 762, 763) on the platform and/or the base and the pivot points of the legs of the hexapod.

8. Arrangement according to claim 7, wherein the reference body has the shape of a straight prism with two end faces arranged parallel to each other, and in particular a plurality of calibration reference elements are provided on each of the two end faces.

9. Arrangement according to claim 8, wherein the calibration reference elements have a pin or sleeve shape adapted to the engagement elements of the platform and/or the base.

10. Arrangement according to one of claims 7 to 9, wherein both the calibration reference elements of the reference body and the reference elements of the master template are pin- or sleeve-shaped.

11. Arrangement according to one of claims 7 to 10, further comprising a device for introducing a means for the material-locking fixation of the high-precision engagement elements in bores of the platform, in particular an adhesive injection device.

## Revendications

1. Procédé pour l'étalonnage ultraprécis d'une cinématique parallèle comprenant plusieurs pièces, dont au moins une est mobile et réglable à l'aide de paramètres de réglage définis, la position des pièces ou d'un contour extérieur défini par celles-ci étant déterminée à l'aide d'un corps de référence fabriqué ou mesuré avec une grande précision (300) fabriqué ou mesuré avec une grande précision, et les paramètres de réglage associés de la ou de chaque pièce réglée sont enregistrés en tant que paramètres de produit à l'état zéro de la cinématique parallèle,
la cinématique parallèle étant un hexapode qui comporte six pieds (3-8) disposés, en particulier fixés, sur une base optionnelle (2) et réglables, et une plate-forme (1) supportée par les pieds,
des éléments d'engagement de haute précision (761, 762, 763) sont créés ou fixés sur la plate-forme et/ou sur la base de l'hexapode, lesquels éléments d'engagement sont conçus pour s'engager avec des éléments de référence d'étalonnage prévus sur le corps de référence, les éléments d'engagement sont engagés avec les éléments de référence d'étalonnage en déplaçant les pieds, et les paramètres de déplacement des pieds sont enregistrés en tant que paramètres de produit à l'état zéro, **caractérisé en ce que** les éléments d'engagement de haute précision sont générés sur la plate-forme et/ou la base à l'aide d'un gabarit maître (200) qui comporte des éléments de référence aussi bien pour les éléments d'engagement que pour les points d'articulation des jambes de l'hexapode, et les positions aussi bien des éléments d'engagement pour le calibrage que des points d'articulation des jambes sont déterminées au moyen des éléments de référence du gabarit maître, des éléments de référence en forme de tige étant notamment prévus dans le cas d'éléments d'engagement en forme de douille, ou des éléments de référence en forme de douille étant prévus dans le cas d'éléments d'engagement en forme de tige du gabarit maître.

2. Procédé selon la revendication 1, dans lequel les éléments d'engagement ont une forme de douille et les éléments de référence de calibrage ont une forme de tige adaptée aux dimensions des douilles, ou inversement.

3. Procédé selon la revendication 1 ou 2, dans lequel le corps de référence a la forme d'un prisme droit, la plate-forme et/ou la base de l'hexapode présentent une ouverture adaptée à la forme de la surface de base du corps de référence et, en particulier, une première et une deuxième pluralité d'éléments de référence d'étalonnage sont prévus sur les faces frontales supérieure et inférieure parallèles du corps de référence, la première pluralité d'éléments de référence d'étalonnage étant mise en prise avec la plate-forme et la deuxième pluralité d'éléments de référence d'étalonnage étant mise en prise avec la base ou avec un support d'étalonnage de l'hexapode pendant le processus d'étalonnage,
le corps de référence étant introduit dans la zone des jambes de l'hexapode à travers l'ouverture pour le calibrage et retiré de celle-ci après le calibrage.

4. Procédé selon la revendication 1 ou 2, dans lequel la plate-forme et la base de l'hexapode ont une forme de base polygonale, et le corps de référence a une découpe continue ou une découpe supérieure et inférieure adaptée à la forme de base de la plate-forme et de la base, et en particulier une première et une deuxième pluralité d'éléments de référence d'étalonnage sont prévus sur les faces frontales supérieure et inférieure parallèles du corps de référence, la première pluralité d'éléments de référence d'étalonnage étant mise en prise avec la plate-forme et la deuxième pluralité d'éléments de référence d'étalonnage étant mise en prise avec la base ou avec un support d'étalonnage de l'hexapode pendant le processus d'étalonnage,
et l'hexapode est introduit dans le corps de référence à travers l'ouverture ou les ouvertures pour le calibrage et retiré de celui-ci après le calibrage.

5. Procédé selon l'une des revendications précédentes, dans lequel les éléments d'engagement et/ou les points d'articulation des jambes sont fixés par insertion et fixation par adhérence, en particulier par collage, de douilles ou de goupilles dans des alésages préfabriqués, plus grands que les douilles ou les goupilles, dans la plate-forme et/ou la base.

6. Procédé de fabrication d'une cinématique parallèle,
les pièces étant pré-assemblées pour former une cinématique parallèle de base et la cinématique parallèle étant achevée par l'application du procédé selon l'une des revendications précédentes.

7. Dispositif pour la mise en œuvre du procédé selon l'une des revendications précédentes, qui comprend un corps de référence de haute précision (300) pour déterminer la position des pièces de la cinématique parallèle et qui comprend en outre au moins un gabarit maître (200) avec des éléments de référence (202 - 219) pour déterminer la position des éléments d'engagement de haute précision (761, 762, 763) sur la plate-forme et/ou la base et des points d'articulation des jambes de l'hexapode.

8. Dispositif selon la revendication 7, dans lequel le corps de référence a la forme d'un prisme droit avec deux faces frontales parallèles l'une à l'autre, et en particulier une pluralité d'éléments de référence d'étalonnage est prévue sur chacune des deux faces frontales.

9. Dispositif selon la revendication 8, dans lequel les éléments de référence d'étalonnage ont une forme de tige ou de douille adaptée aux éléments d'engagement de la plate-forme et/ou de la base.

10. Dispositif selon l'une des revendications 7 à 9, dans lequel les éléments de référence d'étalonnage du corps de référence et les éléments de référence du gabarit maître ont tous deux la forme d'une tige ou d'un manchon.

11. Dispositif selon l'une des revendications 7 à 10, comprenant en outre un dispositif pour introduire un moyen de fixation par adhérence des éléments d'engagement de haute précision dans des alésages de la plate-forme, en particulier un dispositif d'injection de colle.
